(19) Europäisches Patentamt
European Patent Office
Office européen des brevets

(11) **EP 2 518 541 A1**

(12) **EUROPEAN PATENT APPLICATION**
published in accordance with Art. 153(4) EPC

(43) Date of publication:
**31.10.2012 Bulletin 2012/44**

(21) Application number: **10839491.7**

(22) Date of filing: **22.12.2010**

(51) Int Cl.:
***G02B 5/30*** *(2006.01)* ***G02B 5/26*** *(2006.01)*

(86) International application number:
**PCT/JP2010/073208**

(87) International publication number:
**WO 2011/078261 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.12.2009 JP 2009295778**

(71) Applicant: **Dai Nippon Printing Co., Ltd.**
**Tokyo 162-8001 (JP)**

(72) Inventors:
- **HAMADA, Satoru**
  **Tokyo 162-8001 (JP)**
- **TAKESHIGE, Shoji**
  **Tokyo 162-8001 (JP)**
- **KASHIMA, Keiji**
  **Tokyo 162-8001 (JP)**

(74) Representative: **Hatt, Anna Louise**
**Beck Greener**
**Fulwood House**
**12 Fulwood Place**
**London WC1V 6HR (GB)**

# (54) ELECTROMAGNETIC WAVE REFLECTIVE MEMBER PRODUCTION METHOD

(57) A main object of the present invention is to provide an electromagnetic wave reflective member production method which allows provision of a left-circularly-polarized-light selective reflective layer with excellent reflectivity directly on a right-circularly-polarized-light selective reflective layer. The present invention solves the above problems by providing an electromagnetic wave reflective member production method comprising steps of: a right-circularly-polarized-light selective reflective layer forming step, and a left-circularly-polarized-light selective reflective layer forming step, characterized in that a right-handed twisted coating film is formed in the right-circularly-polarized-light selective reflective layer forming step by applying a right-handed twisting coating liquid on a transparent substrate and forming a substantially fully cured right-circularly-polarized-light selective reflective layer by means of energy irradiation of the right-handed twisted coating film; and a left-handed twisted coating film is formed in the left-circularly-polarized-light selective reflective layer forming step by applying a left-handed twisting coating liquid on the right-circularly-polarized-light selective reflective layer and forming a left-circularly-polarized-light selective reflective layer by means of energy irradiation of the left-handed twisted coating film.

FIG. 1A

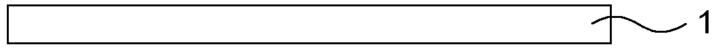


EP 2 518 541 A1

FIG. 1B

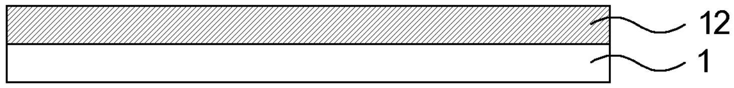


FIG. 1C

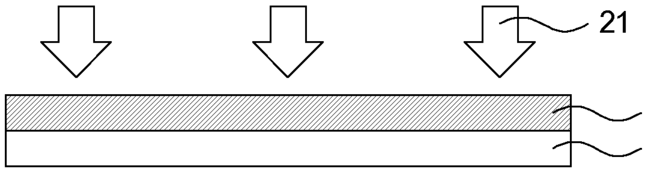


FIG. 1D

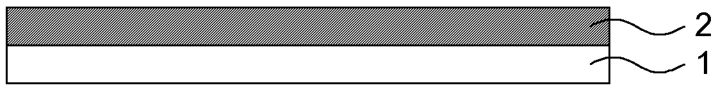


FIG. 1E

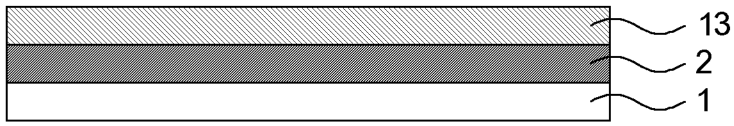


FIG. 1F

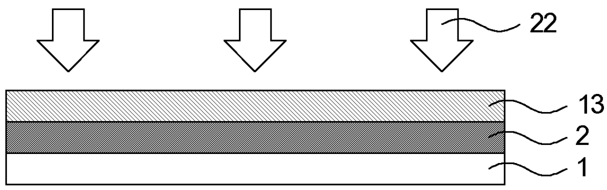


FIG. 1G

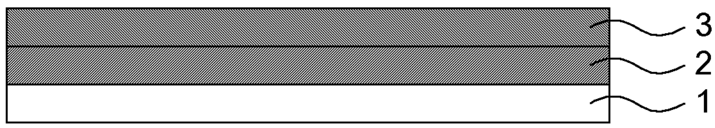

## Description

### Technical Field

The present invention relates to an electromagnetic wave reflective member production method which allows provision of a left-circularly-polarized-light selective reflective layer with excellent reflectivity directly on a right-circularly-polarized-light selective reflective layer.

### Background Art

A selective reflective member using a cholesteric liquid crystal is known as a member capable of selectively reflecting a desired wavelength in a wavelength range of visible light rays to infrared rays. These selective reflective members are expected for utilization as a heat ray reflective film and a permeable heat insulating film, for example, for transmitting visible light rays and reflecting only heat rays by reason of being capable of selectively reflecting only desired light (electromagnetic wave).

For example, the following literatures are known with regard to an electromagnetic wave reflective member for reflecting an electromagnetic wave by using a cholesteric liquid crystal. A laminated body composed of a transparent substrate with thin-film coating for reflecting near infrared rays in a wide band and a filter made of a cholesteric liquid crystal having acute wavelength selective reflectivity in a near infrared ray portion is disclosed in Patent Literature 1. This technique is intended for reflecting near infrared rays with high efficiency without deteriorating transmittance of visible light. Additionally, heat insulating coating including one kind or more of a cholesteric layer for reflecting at least 40% of incident radiation in an infrared wavelength range is disclosed in Patent Literature 2. This technique is intended for obtaining a desired heat insulating effect by using a cholesteric layer.

In addition, a polymer liquid crystal layer structure provided with a polymer liquid crystal layer with optical reflectance improved by a specific method and a support for supporting this polymer liquid crystal layer, in which the reflectance is 35% or more relative to light with a specific wavelength, is disclosed in Patent Literature 3. This technique is used mainly for a liquid crystal display (LCD), and improves the reflectance of the polymer liquid crystal layer by using a fluorine-based nonionic surface active agent. Additionally, a self-adhesive double coated film for shielding near infrared rays provided with a near infrared ray shielding layer having a selective reflective layer A composed of a polymer solidified body layer having a cholesteric liquid crystal structure, which transmits visible light and selectively reflects near infrared rays in a specific wavelength range, is disclosed in Patent Literature 4. This technique is used mainly for a plasma display panel (PDP), and restrains an electromagnetic wave by the PDP from influencing the periphery by the self-adhesive double coated film for shielding near infrared rays.

### Citation List

### Patent Literature

Patent Literature 1: Japanese Patent Application Laid-Open No. H04-281403
Patent Literature 2: Japanese PCT National Publication No. 2001-519317
Patent Literature 3: Japanese Patent No. 3,419,568
Patent Literature 4: Japanese Patent Application Laid-Open No. 2008-209574

### Summary of Invention

### Technical Problem

A right-circularly-polarized-light selective reflective layer for selectively reflecting only right circularly polarized light and a left-circularly-polarized-light selective reflective layer for selectively reflecting only left circularly polarized light are conceived for a selective reflective layer of an electromagnetic wave reflective member. In addition, a method for using a chiral agent for providing right-handed twisting properties or left-handed twisting properties is conceived for forming a right-circularly-polarized-light selective reflective layer or a left-circularly-polarized-light selective reflective layer, respectively. However, whereas a chiral agent for providing right-handed twisting properties prevails generally, the present condition is that a chiral agent for providing left-handed twisting properties is scarcely known.

If an electromagnetic wave reflective member has not merely a right-circularly-polarized-light selective reflective layer but both of a right-circularly-polarized-light selective reflective layer and a left-circularly-polarized-light selective

reflective layer, whose reflective bands overlap, reflectance in the reflective bands may be expected to improve for the reason that both of right circularly polarized light and left circularly polarized light may be reflected. However, it is anticipated that a left-circularly-polarized-light selective reflective layer with excellent reflectivity is directly created with difficulty on a right-circularly-polarized-light selective reflective layer. The reason therefor is that a right-circularly-polarized-light selective reflective layer and a left-circularly-polarized-light selective reflective layer have different twisting properties from each other. That is to say, a rodlike compound rotates clockwise in a right-circularly-polarized-light selective reflective layer; therefore, when left-handed twisting properties attempts to be provided for the rodlike compound on the surface of the right-circularly-polarized-light selective reflective layer (the interface between both layers), desired left-handed twisting properties may not be provided for the rodlike compound due to the influence of the rodlike compound twisting clockwise, and it is anticipated that a left-circularly-polarized-light selective reflective layer with excellent reflectivity may not be obtained.

The present invention has been made in view of the actual circumstances, and the main object thereof is to provide an electromagnetic wave reflective member production method which allows provision of a left-circularly-polarized-light selective reflective layer with excellent reflectivity directly on a right-circularly-polarized-light selective reflective layer.

Solution to Problem

In order to solve the problems, the present invention provides an electromagnetic wave reflective member production method comprising steps of: a right-circularly-polarized-light selective reflective layer forming step and a left-circularly-polarized-light selective reflective layer forming step, characterized in that a right-handed twisted coating film is formed in the right-circularly-polarized-light selective reflective layer forming step by applying a right-handed twisting coating liquid containing a first rodlike compound which has a polymerizable functional group in a molecule and is capable of forming a cholesteric structure, and a chiral agent for providing right-handed twisting properties on a transparent substrate and forming a substantially fully cured right-circularly-polarized-light selective reflective layer by means of energy irradiation of the right-handed twisted coating film for polymerization of the first rodlike compound; and a left-handed twisted coating film is formed in the left-circularly-polarized-light selective reflective layer forming step by applying a left-handed twisting coating liquid containing a second rodlike compound which has a polymerizable functional group in a molecule and is capable of forming a cholesteric structure, and a chiral agent for providing left-handed twisting properties on the right-circularly-polarized-light selective reflective layer and forming a left-circularly-polarized-light selective reflective layer by means of energy irradiation of the left-handed twisted coating film for polymerization of the second rodlike compound.

The present invention allows provision of a left-circularly-polarized-light selective reflective layer with excellent reflectivity directly on a right-circularly-polarized-light selective reflective layer by substantially fully curing the right-circularly-polarized-light selective reflective layer.

In the invention, it is preferable that the energy irradiation in the right-circularly-polarized-light selective reflective layer forming step be ultraviolet irradiation and the intensity of the ultraviolet irradiation be 400 mJ/cm$^2$ or more. The reason therefor is to easily obtain a substantially fully cured right-circularly-polarized-light selective reflective layer.

Advantageous Effects of Invention

The present invention has the effect that a left-circularly-polarized-light selective reflective layer with excellent reflectivity may be created directly on a right-circularly-polarized-light selective reflective layer.

Brief Description of Drawings

FIGS. 1A to 1G are each a schematic cross-sectional view and showing an example of an electromagnetic wave reflective member production method of the present invention.

FIGS. 2A to 2C are each a schematic cross-sectional view exemplifying an electromagnetic wave reflective member obtained by the present invention.

FIG. 3 is a solar light spectrum on the ground.

FIG. 4 is a graph exemplifying a relation between wavelength and reflectance in a first reflective band.

FIG. 5 is a graph exemplifying a relation between wavelength and reflectance in a first reflective band and a second reflective band.

FIG. 6 is a graph exemplifying a relation between wavelength and reflectance in a first reflective band and a second reflective band.

FIG. 7 is a graph showing a relation between wavelength and reflectance in an electromagnetic wave reflective member obtained in Examples 1-1 and 1-5.

FIG. 8 is a graph showing a relation between wavelength and reflectance in an electromagnetic wave reflective member obtained in Example 2.

FIG. 9 is a graph showing a relation between wavelength and reflectance in an electromagnetic wave reflective member obtained in Example 3.

Description of Embodiments

An electromagnetic wave reflective member production method of the present invention is hereinafter described in detail.

An electromagnetic wave reflective member production method of the present invention comprises a right-circularly-polarized-light selective reflective layer forming step and a left-circularly-polarized-light selective reflective layer forming step, characterized in that a right-handed twisted coating film is formed in the right-circularly-polarized-light selective reflective layer forming step by applying a right-handed twisting coating liquid containing a first rodlike compound which has a polymerizable functional group in a molecule and is capable of forming a cholesteric structure, and a chiral agent for providing right-handed twisting properties on a transparent substrate and forming a substantially fully cured right-circularly-polarized-light selective reflective layer by means of energy irradiation of the right-handed twisted coating film for polymerization of the first rodlike compound; and a left-handed twisted coating film is formed in the left-circularly-polarized-light selective reflective layer forming step by applying: a left-handed twisting coating liquid containing a second rodlike compound which has a polymerizable functional group in a molecule and is capable of forming a cholesteric structure, and a chiral agent for providing left-handed twisting properties on the right-circularly-polarized-light selective reflective layer and forming a left-circularly-polarized-light selective reflective layer by means of energy irradiation of the left-handed twisted coating film for polymerization of the second rodlike compound.

FIGS. 1A to 1G are each a schematic cross-sectional view and showing an example of an electromagnetic wave reflective member production method of the present invention. In FIGS. 1A to 1G, first, a transparent substrate 1 is prepared (FIG. 1A) . Next, a right-handed twisting coating liquid containing a first rodlike compound which has a polymerizable functional group in a molecule and is capable of forming a cholesteric structure, and a chiral agent for providing right-handed twisting properties is applied and dried on the transparent substrate 1 to thereby form a right-handed twisted coating film 12 (FIG. 1B). On this occasion, the first rodlike compound forms the cholesteric structure by the chiral agent. In addition, the first rodlike compound is polymerized by means of energy irradiation 21 of the right-handed twisted coating film 12 to obtain a substantially fully cured right-circularly-polarized-light selective reflective layer 2 (FIGS. 1C and 1D). Thus, the first rodlike compound forming the cholesteric structure is fixed.

In the present invention, 'substantially fully cured' signifies that the hardness of the right-circularly-polarized-light selective reflective layer 2 polymerized in accordance with the energy irradiation becomes approximately constant. Generally, the hardness of the right-circularly-polarized-light selective reflective layer 2 rises as the polymerization progresses; when more energy than predeterimned energy is irradiated, the hardness of the right-circularly-polarized-light selective reflective layer 2 becomes constant thereafter. In the case of defining the constant hardness as the maximum hardness, in the present invention, the energy irradiation is preferably performed so as to become 80% or more of the maximum hardness, the energy irradiation is more preferably performed so as to become 85% or more of the maximum hardness, and the energy irradiation is far more preferably performed so as to become 90% or more of the maximum hardness.

Next, a left-handed twisting coating liquid containing a second rodlike compound which has a polymerizable functional group in a molecule and is capable of forming a cholesteric structure, and a chiral agent for providing left-handed twisting properties is applied and dried on the right-circularly-polarized-light selective reflective layer 2 to thereby form a left-handed twisted coating film 13 (FIG. 1E). On this occasion, the second rodlike compound forms the cholesteric structure by the chiral agent. In addition, the second rodlike compound is polymerized by means of energy irradiation 22 of the left-handed twisted coating film 13 to obtain a left-circularly-polarized-light selective reflective layer 3 (FIGS. 1F and 1G). Thus, the second rodlike compound forming the cholesteric structure is fixed to obtain an electromagnetic wave reflective member.

Thus, according to the present invention, the right-circularly-polarized-light selective reflective layer is cured substantially fully so that a left-circularly-polarized-light selective reflective layer with excellent reflectivity may be created directly on the right-circularly-polarized-light selective reflective layer. When the right-circularly-polarized-light selective reflective layer is cured substantially fully, the influence of the right-handed rodlike compound may be made less in forming a left-circularly-polarized-light selective reflective layer so that desired left-handed twisting properties may be provided for the rodlike compound.

A selective reflective layer (right-circularly-polarized-light selective reflective layer or left-circularly-polarized-light selective reflective layer) in the present invention is a layer for reflecting an electromagnetic wave of a right circularly

polarized component or a left circularly polarized component. The selective reflective layer has the function of selectively reflecting a right circularly polarized component or a left circularly polarized component of incident light (electromagnetic wave) through one plane of the layer and transmitting the other component. A cholesteric liquid crystal material is known as a material capable of reflecting only a specific circularly polarized component in this manner. The cholesteric liquid crystal material has the property of selectively reflecting one polarized light of two, right-handed and left-handed, circularly polarized lights of incident light (electromagnetic wave) along the helical axis in a planar array of the liquid crystal. This property is known as circular dichroism, and when a twisting direction in a helical structure of a cholesteric liquid crystal molecule is properly selected, circularly polarized light having the same direction of optical twisting as the rotational direction is selectively reflected.

The maximum optical rotation polarized light scattering in this case occurs at selective wavelength λ in the following expression (1):

$$\lambda = n_{av} \cdot p \qquad (1).$$

In the expression (1), $n_{av}$ is an average refractive index in a plane orthogonal to the helical axis and "p" is a helical pitch in a helical structure of the liquid crystal molecule.

The band width Δλ of a reflection wavelength is represented by the following expression (2):

$$\Delta\lambda = \Delta n \cdot p \qquad (2).$$

In the expression (2), Δn is a birefringence of the cholesteric liquid crystal material. That is to say, a selective reflective layer composed of the cholesteric liquid crystal material reflects one of right-handed or left-handed circularly polarized components of light (electromagnetic wave) in a range of the wavelength band width Δλ centering around the selective wavelength λ, and transmits the other circularly polarized component and unpolarized light (electromagnetic wave) in other wavelength ranges. Accordingly, proper selection of $n_{av}$ and "p" of the cholesteric liquid crystal material allows desired electromagnetic wave to be reflected.

An electromagnetic wave reflective member production method of the present invention is hereinafter described in each step.

1. Right-circularly-polarized-light selective reflective layer forming step

First, a right-circularly-polarized-light selective reflective layer forming step in the present invention is described. The right-circularly-polarized-light selective reflective layer forming step in the present invention is a step for forming a right-handed twisted coating film by applying a right-handed twisting coating liquid containing a first rodlike compound which has a polymerizable functional group in a molecule and is capable of forming a cholesteric structure, and a chiral agent for providing right-handed twisting properties on a transparent substrate and forming a substantially fully cured right-circularly-polarized-light selective reflective layer by means of energy irradiation of the right-handed twisted coating film for polymerization of the first rodlike compound.

In the present invention, the right-circularly-polarized-light selective reflective layer forming step may be repeated twice or more. Thus, a right-circularly-polarized-light selective reflective layer of two layers or more may be obtained.

(1) Right-handed twisting coating liquid

A right-handed twisting coating liquid in the present invention has a first rodlike compound and a chiral agent for providing right-handed twisting properties. In addition, the right-handed twisting coating liquid generally contains a solvent for dispersing a first rodlike compound and a chiral agent. Additionally, the right-handed twisting coating liquid may further contain a polymerization initiator.

(i) First rodlike compound

A first rodlike compound in the present invention is a compound having a polymerizable functional group in a molecule, capable of forming a cholesteric structure. Here, the polymerizable functional group is generally a three-dimensionally cross-linkable polymerizable functional group. The term 'Three-dimensional cross-linking' signifies that

the rodlike compounds are three-dimensionally polymerized with each other and made into a state of a mesh (network) structure. Additionally, the polymerizable functional group is preferably a polymerizable functional group which polymerizes by an ionizing radiation such as ultraviolet rays and electron rays, or a thermal action. Typical examples of these polymerizable functional groups include a radical polymerizable functional group or a cationic polymerizable functional group. In addition, typical examples of the radical polymerizable functional group include a functional group having at least one addition-polymerizable ethylenic unsaturated double bond, and specific examples thereof include a vinyl group having or not having a substituent, and an acrylate group (a general term including an acryloyl group, a methacryloyl group, an acryloyloxy group and a methacryloyloxy group). Additionally, specific examples of the cationic polymerizable functional group include an epoxy group. Other examples of the polymerizable functional group include an isocyanate group and an unsaturated triple bond. Among these, a functional group having an ethylenic unsaturated double bond is appropriately used in view of process.

Additionally, the first rodlike compound is preferably a liquid crystalline material exhibiting liquid crystallinity, and above all, preferably a nematic liquid crystalline material. Examples of the liquid crystalline material include compounds represented by the following chemical formulae (1) to (6).

[Chemical Formula 1]

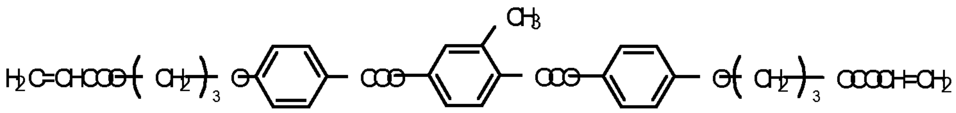 (1)

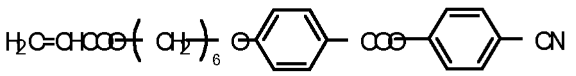 (2)

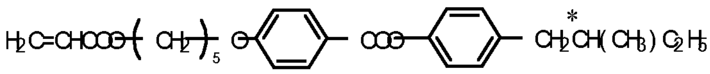 (3)

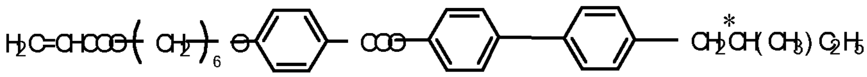 (4)

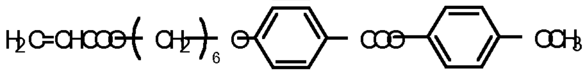 (5)

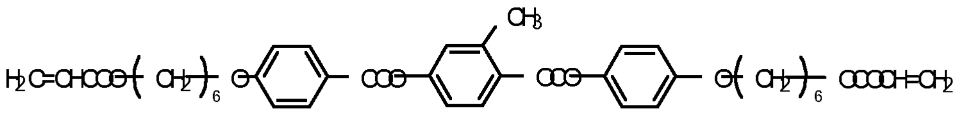 (6)

Here, the liquid crystalline material represented by the chemical formulae (1), (2), (5) and (6) may be prepared in accordance with or similarly to the method disclosed in D. J. Broer et al., Makromol. Chem. 190, 3201-3215 (1989), or D. J. Broer et al., Makromol. Chem. 190, 2255-2268 (1989). Additionally, the preparation of the liquid crystalline material represented by the chemical formulae (3) and (4) is disclosed in DE195,04,224.

Specific examples of the nematic liquid crystalline material having an acrylate group at the end also include materials represented by the following chemical formulae (7) to (17).

[Chemical Formula 2]

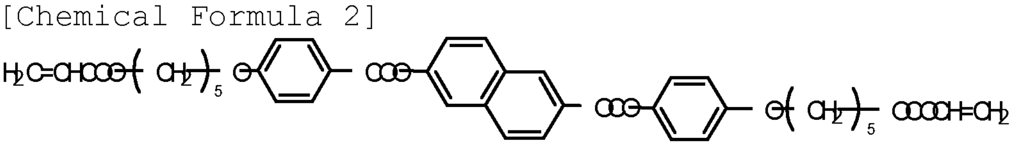 (7)

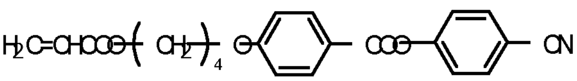 (8)

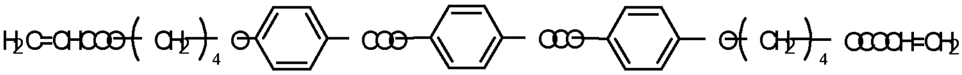

(9)

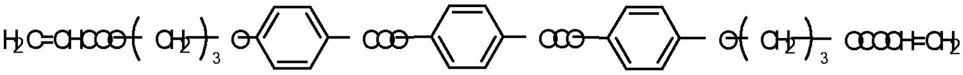

(10)

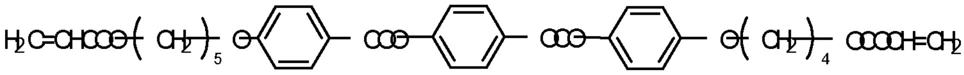

(11)

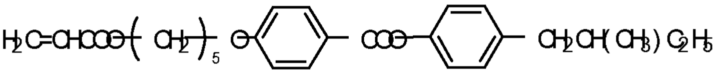

(12)

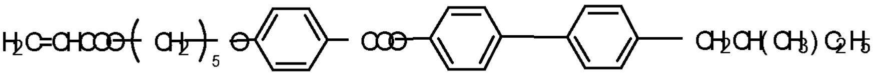

(13)

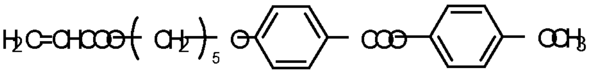

(14)

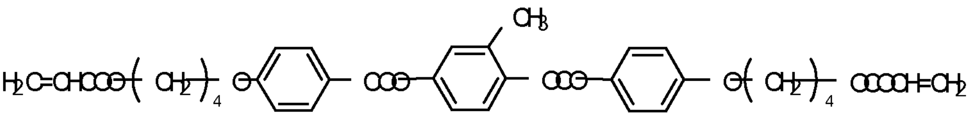

(15)

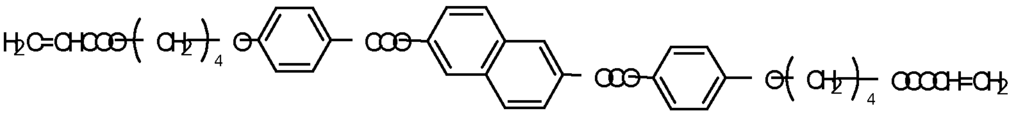

(16)

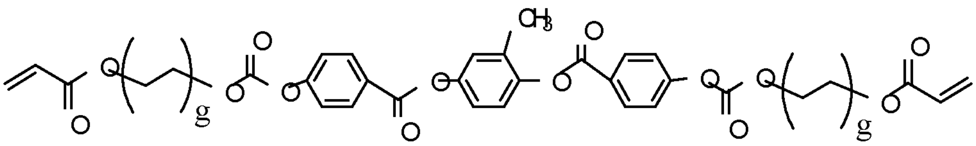

(17)

g: Integer of 2 to 5

In addition, examples of the first rodlike compound include a compound represented by the following chemical formula (18) disclosed in SID 06 DIGEST 1673-1676.

[Chemical Formula 3]

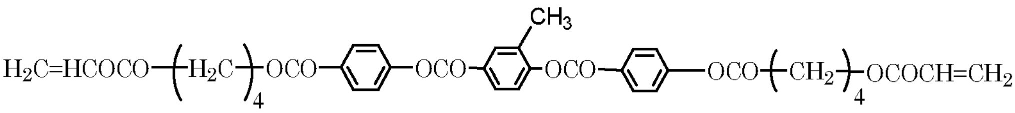

(18)

In the present invention, the first rodlike compound may be used by only one kind or by mixture of two kinds or more. For example, the use by mixture of a liquid crystalline material having one or more polymerizable functional group at both ends and a liquid crystalline material having one or more polymerizable functional group at an end as the first rodlike compound is preferable in view of being capable of optionally adjusting polymerization density (crosslink density) and optical property by the adjustment of the compounding ratio of both.

(ii) Chiral agent for providing right-handed twisting properties

A chiral agent for providing right-handed twisting properties provides right-handed twisting properties to the above-mentioned rodlike compound to form a cholesteric structure. A low-molecular compound having axially chiral in a molecule, represented by the following general formula (19), (20) or (21), is preferably used as the chiral agent.

[Chemical Formula 4]

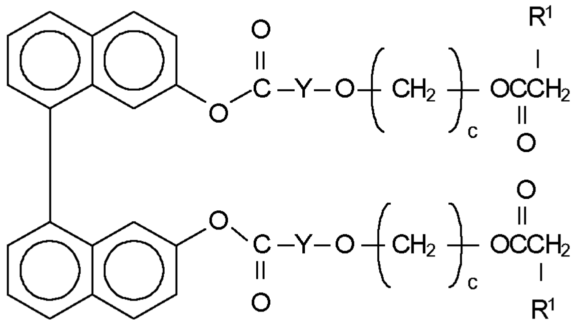

(19)

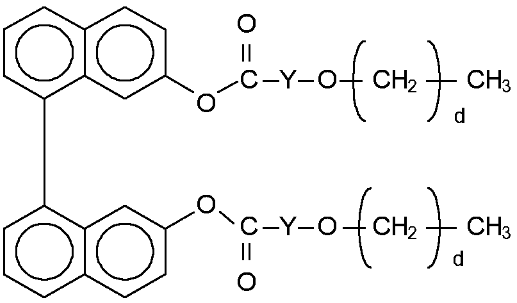

(20)

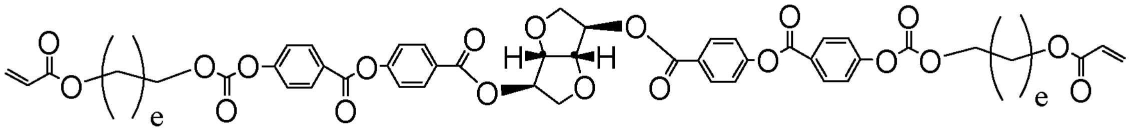

(e = integer of 2 to 5)

(21)

[Chemical Formula 5]

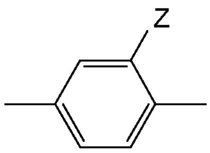

( i )

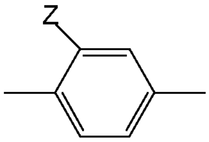

( ii )

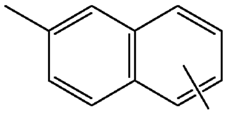

( iii )

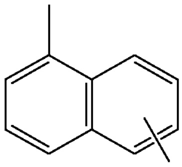

( iv )

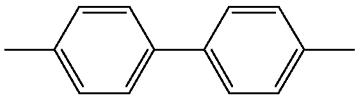

( v )

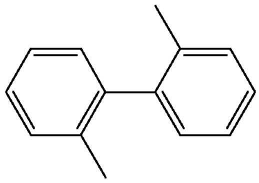

( vi )

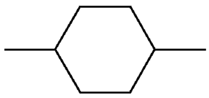

( vii )

[Chemical Formula 6]

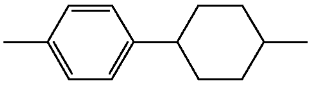
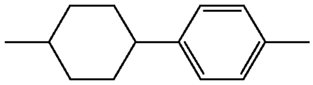
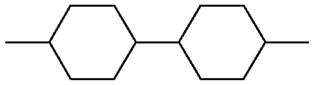

( viii ) ( ix ) ( x )

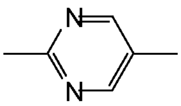
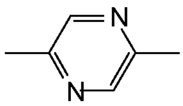
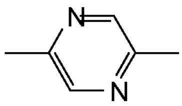
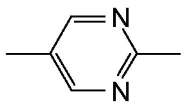

( x i ) ( x ii ) ( x iii ) ( x iv )

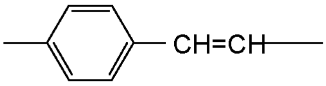
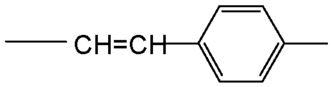

( x v ) ( x vi )

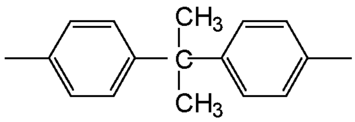

( x vii )

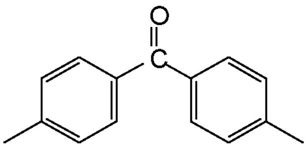
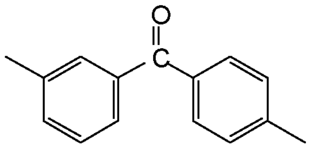
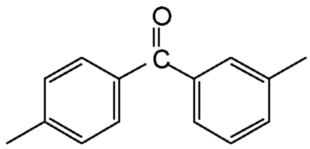

( x viii ) ( x ix ) ( x x )

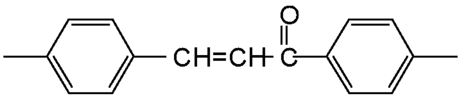
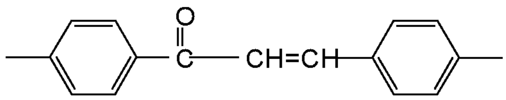

( x x i ) ( x x ii )

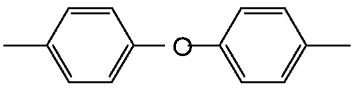
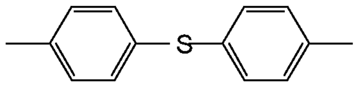

( x x iii ) ( x x iv )

In the general formula (19) or (20), $R^1$ denotes hydrogen or a methyl group. The mark "Y" is any one of the formulae (i) to (xxiv) represented above, and above all, preferably any one of the formulae (i), (ii), (iii), (v) and (vii). Each of "c" and "d" denoting the chain length of an alkylene group may be individually an optional integer of 2 to 12, preferably 4 to 10, and more preferably 6 to 9. A compound represented by the following chemical formula may be also used as the chiral agent.

[Chemical Formula 7]

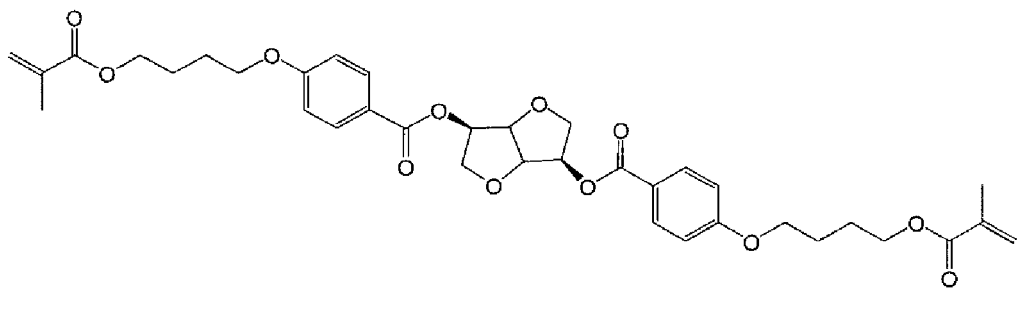

Additionally, in the present invention, the wavelength of reflected light may be adjusted by the added amount

of the chiral agent. The ratio of the chiral agent to the total of the first rodlike compound and the chiral agent is preferably within a range of 1.0% by weight to 5.0% by weight, for example, and 2.0% by weight to 4.0% by weight, above all.

(iii) Other components

The right-handed twisting coating liquid in the present invention preferably contains a polymerization initiator further. The reason therefor is that a polymerization reaction is easily caused. The kind of a polymerization initiator is not particularly limited but preferably selected properly in accordance with the kind of irradiated energy. Specific examples thereof include a photo polymerization initiator and a thermal polymerization initiator. Additionally, the ratio of a polymerization initiator in the right-handed twisting coating liquid is not particularly limited but a polymerization initiator is preferably added so as to cause a desired polymerization reaction.

Additionally, the right-handed twisting coating liquid in the present invention generally contains a solvent. The solvent is not particularly limited if it may disperse a first rodlike compound and a chiral agent and obtain a desired right-handed twisted coating film, and examples thereof include cyclohexanone.

(2) Transparent substrate

Next, a transparent substrate in the present invention is described. The transparent substrate in the present invention is not particularly limited if it may support a right-circularly-polarized-light selective reflective layer. Above all, with regard to the transparent substrate, generally, transmittance in a visible light range is preferably 80% or more, and more preferably 90% or more. Here, the transmittance of the transparent substrate may be measuerd by JIS K7361-1 (test method of total light transmittance of plastic transparent material).

Both a flexible material with flexibility and a rigid material with no flexibility may be used for the transparent substrate if they have desired transparency. Examples of the transparent substrate include a transparent substrate made of polyester resin such as polyethylene terephthalate and polyethylene naphthalate, olefin resin such as polyethylene and polymethylpentene, acrylic resin, polyurethane resin, and resins such as polyether sulfone, polycarbonate, polysulfone, polyether, polyether ketone, (meth)acrylonitrile, cycloolefin polymer and cycloolefin copolymer. Above all, a transparent substrate made of polyethylene terephthalate is preferably used. The reason therefor is that polyethylene terephthalate is high in general-purpose properties and easily available.

Additionally, a rigid material such as glass may be used as the transparent substrate. The thickness of the transparent substrate may be properly determined in accordance with such as uses of an electromagnetic wave reflective member and materials composing the transparent substrate, and is not particularly limited.

(3) Forming method for right-circularly-polarized-light selective reflective layer

In the present invention, first, a right-handed twisted coating film is formed on a transparent substrate by using a right-handed twisting coating liquid, and a substantially fully cured right-circularly-polarized-light selective reflective layer is next formed by means of energy irradiation of the right-handed twisted coating film.

General application methods may be used as a method for applying a right-handed twisting coating liquid on a transparent substrate; specific examples thereof include a bar coat method, a spin coat method and a blade coat method. Generally, a right-handed twisted coating film is obtained by drying a right-handed twisting coating liquid applied on a transparent substrate to remove a solvent.

The kind of energy irradiated on a right-handed twisted coating film varies with the kind of a polymerizable functional group contained in a molecule of a first rodlike compound; examples thereof include an ionizing radiation such as ultraviolet rays and electron rays, and heat. Above all, in the present invention, ultraviolet irradiation is preferably performed. Additionally, the intensity of energy irradiation is not particularly limited if it is the intensity capable of obtaining a substantially cured right-circularly-polarized-light selective reflective layer. For example, in the case of performing ultraviolet irradiation, the intensity of ultraviolet irradiation is preferably 400 $mJ/cm^2$ or more, more preferably 600 $mJ/cm^2$ or more, and far more preferably 800 $mJ/cm^2$ or more.

The thickness of a right-circularly-polarized-light selective reflective layer is not particularly limited, being preferably within a range of 0.1 $\mu$m to 100 $\mu$m, more preferably within a range of 0.5 $\mu$m to 20 $\mu$m, and far more preferably within a range of 1 $\mu$m to 10 $\mu$m.

2. Left-circularly-polarized-light selective reflective layer forming step

Next, a left-circularly-polarized-light selective reflective layer forming step in the present invention is described. The left-circularly-polarized-light selective reflective layer forming step in the present invention is a step for forming a left-handed twisted coating film by applying a left-handed twisting coating liquid containing a second rodlike compound

which has a polymerizable functional group in a molecule and is capable of forming a cholesteric structure, and a chiral agent for providing left-handed twisting properties on the right-circularly-polarized-light selective reflective layer and forming a left-circularly-polarized-light selective reflective layer by means of energy irradiation of the left-handed twisted coating film for polymerization of the second rodlike compound.

In the present invention, the left-circularly-polarized-light selective reflective layer forming step may be repeated twice or more. Thus, a left-circularly-polarized-light selective reflective layer of two layers or more may be obtained. Additionally, in the left-circularly-polarized-light selective reflective layer forming step, a left-circularly-polarized-light selective reflective layer contacting with the right-circularly-polarized-light selective reflective layer is preferably cured substantially fully.

A left-handed twisting coating liquid in the present invention has a second rodlike compound and a chiral agent for providing left-handed twisting properties. In addition, the left-handed twisting coating liquid generally contains a solvent for dispersing a second rodlike compound and a chiral agent. Additionally, the left-handed twisting coating liquid may further contain a polymerization initiator.

A second rodlike compound in the present invention may adopt the same compound as the various rodlike compounds described in the ' (1) Right-handed twisting coating liquid (i) First rodlike compound'. In the present invention, a second rodlike compound may be the same as a first rodlike compound or different therefrom.

Additionally, a chiral agent for providing left-handed twisting properties provides left-handed twisting properties to the above-mentioned rodlike compound to form a cholesteric structure. The chiral agent is not particularly limited and examples thereof include CNL-716™ manufactured by ADEKA CORPORATION.

Additionally, the ratio of the chiral agent to the total of the second rodlike compound and the chiral agent is the same as the above-mentioned relation between the first rodlike compound and the chiral agent for providing right-handed twisting properties; therefore, the description herein is omitted. A polymerization initiator and a solvent in a left-handed twisting coating liquid are also the same as the contents described in the above-mentioned '(1) Right-handed twisting coating liquid (iii) Other components'; therefore, the description herein is omitted.

Additionally, in the present invention, first, a left-handed twisted coating film is directly formed on a right-circularly-polarized-light selective reflective layer by using a left-handed twisting coating liquid, and a left-circularly-polarized-light selective reflective layer is next formed by means of energy irradiation of the left-handed twisted coating film. An application method of a left-handed twisting coating liquid, an energy irradiation method on a left-handed twisted coating film, and other items are the same as the contents described in the '(3) Forming method for right-circularly-polarized-light selective reflective layer'; therefore, the description herein is omitted.

The thickness of a left-circularly-polarized-light selective reflective layer is not particularly limited, being preferably within a range of 0.1 μm to 100 μm, more preferably within a range of 0.5 μm to 20 μm, and far more preferably within a range of 1 μm to 10 μm.

3. Electromagnetic wave reflective member

Next, an electromagnetic wave reflective member obtained by the present invention is described. The electromagnetic wave reflective member obtained by the present invention has one, two or more of a right-circularly-polarized-light selective reflective layer and one, two or more of a left-circularly-polarized-light selective reflective layer. Specific examples thereof include: the member having a right-circularly-polarized-light selective reflective layer 2 and a left-circularly-polarized-light selective reflective layer 3 by one layer each as shown in FIG. 1G, the member having right-circularly-polarized-light selective reflective layers 2a and 2b and a left-circularly-polarized-light selective reflective layer 3 as shown in FIG. 2A, the member having right-circularly-polarized-light selective reflective layers 2a and 2b and left-circularly-polarized-light selective reflective layers 3a and 3b as shown in FIG. 2B, and the member having a right-circularly-polarized-light selective reflective layer 2 and left-circularly-polarized-light selective reflective layers 3a and 3b as shown in FIG. 2C.

Additionally, the electromagnetic wave reflective member of the present invention is preferably an infrared reflective member having a reflection peak in an infrared region (a region with $\lambda$=800 nm or more). The reason therefor is that it is possible to make an infrared reflective member be useful for heat reflecting glass for vehicles, heat reflecting glass for architecture and heat reflecting film for solar batteries.

Above all, in the present invention, the electromagnetic wave reflective member has a first reflex band corresponding to a first radiant energy band including a peak located on the shortest wavelength side in an infrared region of a solar light spectrum on the ground; in the case where the maximum reflectance in the first reflex band is determined at $R_1$ and a wavelength on the short wavelength side providing half-value reflectance of the $R_1$ is determined at $\lambda_1$, the $\lambda_1$ is preferably within a range of 900 nm to 1010 nm. The reason therefor is to allow infrared rays included in the first radiant energy band to be efficiently reflected.

FIG. 3 is a solar light spectrum on the ground. This 'solar light spectrum on the ground' signifies distribution of radiant energy ($Wm^{-2}$/nm) of average solar light on the ground in the Temperate Zone (AM1.5G). In the solar light

spectrum (AM0) on the earth orbit, the distribution of radiant energy becomes gradual and radiant energy becomes attenuated due to reflection, scattering and absorption in the atmosphere. As a result, the solar light spectrum shown in FIG. 3 is obtained on the ground. In the present specification, 'solar light spectrum on the ground' is occasionally referred to simply as 'solar light spectrum'.

Additionally, in FIG. 4, the electromagnetic wave reflective member has a first reflex band 31 corresponding to a first radiant energy band 21 including a peak located on the shortest wavelength side in an infrared region of a solar light spectrum on the ground. The first radiant energy band 21 generally has a peak in the vicinity of a wavelength of 1010 nm and a wavelength range thereof is 950 nm to 1150 nm. On the other hand, the first reflex band 31 is such that a wavelength providing the maximum reflectance $R_1$ is within a wavelength range of the first radiant energy band 21, and may be formed out of a single selective reflective layer or of a plurality of selective reflective layers. In the present invention, in the case where a wavelength on the short wavelength side providing half-value reflectance ($1/2R_1$) of the maximum reflectance $R_1$ is determined at $\lambda_1$, $\lambda_1$ is preferably within a range of 900 nm to 1010 nm.

Here, the reason why the upper limit of $\lambda_1$ is preferably 1010 nm is as follows. The peak wavelength of the first radiant energy band of a solar light spectrum is in the Vicinity of 1010 nm, and the energy density of infrared rays increases in the proximity of the peak wavelength. Accordingly, in order to efficiently reflect infrared rays in the proximity of the peak wavelength of the first radiant energy band, $\lambda_1$ providing half-value of the maximum reflectance $R_1$ is preferably at least the peak wavelength of the first radiant energy band or less.

In addition, the upper limit of $\lambda_1$ is preferably 970 nm, more preferably 960 nm, and far more preferably 950 nm. The reason why the upper limit of $\lambda_1$ is far more preferably 950 nm is as follows. In the case where the peak intensity in the first radiant energy band of a solar light spectrum is determined at $R_{S1}$ and a solar light spectrum wavelength on the short wavelength side providing half-value intensity of the $R_{S1}$ is determined at $\lambda_{S1}$, $\lambda_{S1}$, is in the vicinity of 950 nm. Thus, the first reflex band may cover most of a part with a high energy density of infrared rays in the first radiant energy band by determining the value of $\lambda_1$ so as to satisfy a relation of $\lambda_1 \leqq \lambda_{S1}$. Thus, infrared rays may be reflected more effectively.

Meanwhile, the reason why the lower limit of $\lambda_1$ is preferably 900 nm is as follows. The $\lambda_1$ is a wavelength of half-value reflectance of $R_1$, so that the first reflex band has a foot reflective region on the shorter wavelength side than $\lambda_1$. The wavelength range of this foot reflective region is assumed to be approximately 100 nm at the maximum in the current material system. Thus, when the lower limit of $\lambda_1$ is less than 900 nm, the shortest wavelength in the foot reflective region becomes less than 800 nm and there is a possibility of reaching a visible light range. In that case, the electromagnetic wave reflective member becomes reddish and there is a possibility that visibility through the electromagnetic wave reflective member deteriorates. Thus, the lower limit of $\lambda_1$ is preferably 900 nm.

Additionally, as shown in FIG. 4, the maximum reflectance in the first reflex band 31 is determined at $R_1$ and a wavelength on the long wavelength side providing half-value reflectance ($1/2R_1$) of $R_1$ is determined at $\lambda_2$. The wavelength range of $\lambda_2$ is not particularly limited and is preferably within a range of 1010 nm to 1210 nm, for example. In addition, the lower limit of $\lambda_2$ is preferably 1050 nm, more preferably 1080 nm, and far more preferably 1090 nm. The reason why the lower limit of $\lambda_2$ is far more preferably 1090 nm is as follows. In the case where the peak intensity in the first radiant energy band of a solar light spectrum is determined at $R_{S1}$ and a solar light spectrum wavelength on the long wavelength side providing half-value intensity of the $R_{S1}$ is determined at $\lambda_{S2}$, $\lambda_{S2}$ is generally in the vicinity of 1090 nm. Thus, the value of $\lambda_2$ is preferably determined so as to satisfy a relation of $\lambda_{S2} \leqq \lambda_2$. On the other hand, the upper limit of $\lambda_2$ is preferably 1150 nm.

Additionally, the position of the peak wavelength of the first reflex band is not particularly limited and is preferably in the proximity of the peak wavelength of the first radiant energy band, being preferably within a range of 900 nm to 1150 nm, for example, within a range of 950 nm to 1100 nm, above all. Additionally, the interval ($\lambda_2$-$\lambda_1$) between $\lambda_1$ and $\lambda_2$ is preferably within a range of 50 nm to 200 nm, for example, and within a range of 100 nm to 200 nm, above all.

Next, the layer composition of a selective reflective layer for allowing provision of the first reflex band is described. The layer composition of a selective reflective layer is not particularly limited if it allows to obtain a desired first reflex band. Examples of the layer composition of a selective reflective layer having the reflex band as shown in FIG. 4 include a layer composition having a right-circularly-polarized-light selective reflective layer 2 corresponding to the first reflex band and a left-circularly-polarized-light selective reflective layer 3 corresponding to the first reflex band, such as shown in FIG. 1G.

Additionally, the electromagnetic wave reflective member in the present invention may have a second reflex band 32 as shown in FIG. 5. In FIG. 5, the first reflex band 31 and the second reflex band 32 are independently shown for convenience, and totaled reflectance is actually measured in a portion in which both overlap (also similar in FIG. 6). Additionally, the second reflex band 32 corresponds to a second radiant energy band 22 including a peak located on the second shortest wavelength side in an infrared region of a solar light spectrum on the ground. The second radiant energy band 22 generally has a peak in the vicinity of a wavelength of 1250 nm and a wavelength range thereof is 1150 nm to 1370 nm. On the other hand, the second reflex band 32 is such that a wavelength providing the maximum reflectance $R_2$ is within a wavelength range of the second radiant energy band 22, and may be formed out of a single

selective reflective layer or of a plurality of selective reflective layers. In the present invention, in the case where a wavelength on the long wavelength side providing half-value reflectance ($1/2R_2$) of the maximum reflectance $R_2$ is determined at $\lambda_4$, $\lambda_4$ is preferably within a range of 1250 nm to 1450 nm.

Here, the reason why the lower limit of $\lambda_4$ is preferably 1250 nm is as follows. The peak wavelength of the second radiant energy band of a solar light spectrum is in the Vicinity of 1250 nm, and the energy density of infrared rays increases in the proximity of the peak wavelength. Accordingly, in order to efficiently reflect infrared rays in the proximity of the peak wavelength of the second radiant energy band, $\lambda_4$ providing half-value of the maximum reflectance $R_2$ is preferably at least the peak wavelength of the second radiant energy band or more. Thus, the lower limit of $\lambda_4$ is preferably 1250 nm.

In addition, the lower limit of $\lambda_4$ is preferably 1330 nm. The reason therefor is as follows. In the case where the peak intensity in the second radiant energy band of a solar light spectrum is determined at $R_{S2}$ and a solar light spectrum wavelength on the long wavelength side providing half-value intensity of the $R_{S2}$ is determined at $\lambda_{S4}$, $\lambda_{S4}$ is in the vicinity of 1330 nm. Thus, the second reflex band may cover most of a part with a high energy density of infrared rays in the second radiant energy band by determining the value of $\lambda_4$ so as to satisfy a relation of $\lambda_{S4} \leqq \lambda_4$. Thus, infrared rays may be reflected more effectively.

Meanwhile, the reason why the upper limit of $\lambda_4$ is preferably 1450 nm is as follows. As described above, the interval ($\lambda_2$-$\lambda_1$) between $\lambda_1$ and $\lambda_2$ is approximately 200 nm at the maximum in one selective reflective layer. This is also the same in the second reflex band 32 shown in FIG. 5 and the interval ($\lambda_4$-$\lambda_3$) between $\lambda_3$ and $\lambda_4$ is approximately 200 nm at the maximum. $\lambda_3$ is a wavelength on the short wavelength side providing half-value reflectance ($1/2R_2$) of $R_2$. On the other hand, in the case of considering that the peak of the second radiant energy band of a solar light spectrum is in the vicinity of 1250 nm, when $\lambda_4$ is made larger than 1450 nm, $\lambda_3$ becomes larger than 1250 nm and the second reflex band may hardly cover a part with a high energy density of infrared rays in the second radiant energy band. Thus, the upper limit of $\lambda_4$ is preferably 1450 nm. Additionally, in order that the second reflex band may cover the second radiant energy band more efficiently, the upper limit of $\lambda_4$ is more preferably 1400 nm.

Additionally, the wavelength range of $\lambda_3$ is not particularly limited and is, for example, preferably within a range of 1050 nm to 1250 nm, and more preferably within a range of 1050 nm to 1200 nm. Additionally, in the case where the peak intensity in the second radiant energy band of a solar light spectrum is determined at $R_{S2}$ and a solar light spectrum wavelength on the short wavelength side providing half-value intensity of the $R_{S2}$ is determined at $\lambda_{S3}$, $\lambda_{S3}$ is generally in the vicinity of 1150 nm. Thus, the value of $\lambda_3$ is preferably determined so as to satisfy a relation of $\lambda_3 \leqq \lambda_{S3}$. Thus, $\lambda_3$ is preferably within a range of 1050 nm to 1150 nm. Additionally, in order that the second reflex band may cover the second radiant energy band more efficiently, $\lambda_3$ is more preferably within a range of 1100 nm to 1150 nm.

Additionally, the position of the peak wavelength of the second reflex band is not particularly limited and is preferably in the proximity of the peak wavelength of the second radiant energy band, being preferably within a range of 1175 nm to 1325 nm, for example, and within a range of 1225 nm to 1275 nm, above all. Additionally, the interval ($\lambda_4$-$\lambda_3$) between $\lambda_3$ and $\lambda_4$ is the same as the above-mentioned interval ($\lambda_2$-$\lambda_1$) between $\lambda_1$ and $\lambda_2$.

Next, the layer composition of a selective reflective layer for allowing provision of the first reflex band and the second reflex band is described. The layer composition of a selective reflective layer is not particularly limited if it allows provision of a desired first reflex band and second reflex band. Examples of the layer composition of a selective reflective layer having the reflex band as shown in FIG. 5 include a layer composition having a right-circularly-polarized-light selective reflective layer 2a corresponding to the first reflex band, a right-circularly-polarized-light selective reflective layer 2b corresponding to the second reflex band, and a left-circularly-polarized-light selective reflective layer 3 corresponding to the first reflex band, such as shown in FIG. 2A. On the other hand, in the present invention, as shown in FIG. 6, the peak of reflectance of the second reflex band may be also determined at 50% or more. Examples of the layer composition of a selective reflective layer having the reflex band as shown in FIG. 6 include a layer composition having a right-circularly-polarized-light selective reflective layer 2a corresponding to the first reflex band, a right-circularly-polarized-light selective reflective layer 2b corresponding to the second reflex band, a left-circularly-polarized-light selective reflective layer 3a corresponding to the first reflex band, and a left-circularly-polarized-light selective reflective layer 3b corresponding to the second reflex band, such as shown in FIG. 2B.

The present invention is not limited to the above embodiments. The above embodiments are exemplification, and any other embodiments are included in the technical scope of the present invention if it has substantially the same constitution as the technical idea described in the claim of the present invention and offers similar operation and effect thereto under any circumstances.

## Examples

The present invention is described more specifically while using examples hereinafter. The 'part' described below signifies 'Part by weight' unless otherwise specified.

[Example 1-1]

A biaxially oriented film made of polyethylene terephthalate was prepared as a transparent substrate. Next, a cyclohexanone solution, in which 96.95 parts of a liquid crystalline monomer molecule (Paliocolor (registered trademark) LC1057 (manufactured by BASF CORPORATION)) having polymerizable acrylate at both ends and a spacer between mesogene in the central portion and the acrylate, and 3. 05 parts of a chiral agent (right-handed twisting properties, Paliocolor (registered trademark) LC756 (manufactured by BASF CORPORATION)) having polymerizable acrylate at both ends were dissolved, was prepared. A photopolymerization initiator (Irgacure 184™) of 5.0% by weight with respect to the liquid crystalline monomer molecule was added to the cyclohexanone solution (a solid content of 30% by weight). This was regarded as a cyclohexanone solution 1.

Next, a cyclohexanone solution, in which 95.65 parts of a liquid crystalline monomer molecule (Paliocolor (registered trademark) LC1057 (manufactured by BASF Corporation)) having polymerizable acrylate at both ends and a spacer between mesogene in the central portion and the acrylate, and 4.35 parts of a chiral agent (left-handed twisting properties, CNL-716 (manufactured by ADEKA CORPORATION)) having polymerizable acrylate were dissolved, was prepared. A photopolymerization initiator (Irgacure 184™) of 5.0% by weight with respect to the liquid crystalline monomer molecule was added to the cyclohexanone solution (a solid content of 30% by weight). This was regarded as a cyclohexanone solution 2.

Next, the cyclohexanone solution 1 was applied to the biaxially oriented film by a bar coater without an oriented film. Subsequently, after retaining at a temperature of 120°C for two minutes, cyclohexanone in the cyclohexanone solution was vaporized to orient the liquid crystalline monomer molecule and obtained a right-handed twisted coating film. Then, the obtained coating film was irradiated with ultraviolet rays at 200 mJ/$cm^2$ (irradiation amount was measured by UV PowerMAP™ manufactured by FUSION UV SYSTEMS Japan K.K., and so forth) by using an ultraviolet irradiation device (H valve manufactured by FUSION UV SYSTEMS Japan K.K., and so forth) to three-dimensionally crosslink and polymerize acrylate of the liquid crystalline monomer molecule oriented by a radical generated from the photopolymerization initiator in the coating film and acrylate of the chiral agent, and then formed a right-circularly-polarized-light selective reflective layer (a film thickness of 5 μm) by fixing a cholesteric structure on the biaxially oriented film.

In addition, the cyclohexanone solution 2 was applied to the right-circularly-polarized-light selective reflective layer by a bar coater. Subsequently, after retaining at a temperature of 120°C for two minutes, cyclohexanone in the cyclohexanone solution was vaporized to orient the liquid crystalline monomer molecule and obtained a left-handed twisted coating film. Then, the obtained coating film was irradiated with ultraviolet rays at 200 mJ/$cm^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a left-circularly-polarized-light selective reflective layer (a film thickness of 5 μm) by fixing a cholesteric structure. Thus, an electromagnetic wave reflective member was obtained.

[Example 1-2]

An electromagnetic wave reflective member was obtained in the same manner as Example 1-1 except for modifying both the intensity of ultraviolet rays irradiated on the right-handed twisted coating film and the intensity of ultraviolet rays irradiated on the left-handed twisted coating film into 400 mJ/$cm^2$.

[Example 1-3]

An electromagnetic wave reflective member was obtained in the same manner as Example 1-1 except for modifying both the intensity of ultraviolet rays irradiated on the right-handed twisted coating film and the intensity of ultraviolet rays irradiated on the left-handed twisted coating film into 600 mJ/$cm^2$.

[Example 1-4]

An electromagnetic wave reflective member was obtained in the same manner as Example 1-1 except for modifying both the intensity of ultraviolet rays irradiated on the right-handed twisted coating film and the intensity of ultraviolet rays irradiated on the left-handed twisted coating film into 800 mJ/$cm^2$.

[Example 1-5]

An electromagnetic wave reflective member was obtained in the same manner as Example 1-1 except for modifying both the intensity of ultraviolet rays irradiated on the right-handed twisted coating film and the intensity of ultraviolet rays irradiated on the left-handed twisted coating film into 1200 mJ/$cm^2$.

[Evaluation 1]

The reflection properties of the electromagnetic wave reflective members obtained in Examples 1-1 to 1-5 were measured (measured at a regular reflection angle of 5°) by using a spectrophotometer (UV-3100PC™ manufactured by SHIMADZU CORPORATION). The results are shown in FIG. 7. As shown in FIG. 7, in Examples 1-1 to 1-5, a reflectance of 50% or more was obtained in a reflex band in the vicinity of 950 nm to 1100 nm, thus it was confirmed that the left-circularly-polarized-light selective reflective layer formed on the right-circularly-polarized-light selective reflective layer performed favorable reflectivity. Additionally, two peaks of a reflex band were confirmed in Example 1-1 and a shoulder was confirmed on the high wavelength side of a reflex band in Example 1-2. On the other hand, neither the second peak nor a shoulder was confirmed in Examples 1-3 to 1-5 with high intensity of ultraviolet rays. Thus, it was confirmed that fuller curing of the right-circularly-polarized-light selective reflective layer allowed the left-circularly-polarized-light selective reflective layer with more favorable reflectivity to be formed.

[Example 2]

A biaxially oriented film made of polyethylene terephthalate was prepared as a transparent substrate. Next, a cyclohexanone solution, in which 96.95 parts of a liquid crystalline monomer molecule (Paliocolor (registered trademark) LC1057 (manufactured by BASF CORPORATION)) having polymerizable acrylate at both ends and a spacer between mesogene in the central portion and the acrylate, and 3. 05 parts of a chiral agent (right-handed twisting properties, Paliocolor (registered trademark) LC756 (manufactured by BASF CORPORATION)) having polymerizable acrylate at both ends were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 1.

Next, a cyclohexanone solution, in which 97.55 parts of a liquid crystalline monomer molecule (Paliocolor (registered trademark) LC1057 (manufactured by BASF CORPORATION)) having polymerizable acrylate at both ends and a spacer between mesogene in the central portion and the acrylate, and 2.45 parts of a chiral agent (right-handed twisting properties, Paliocolor (registered trademark) LC756 (manufactured by BASF CORPORATION)) having polymerizable acrylate at both ends were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 2.

In addition, a cyclohexanone solution, in which 95.65 parts of a liquid crystalline monomer molecule (Paliocolor (registered trademark) LC1057 (manufactured by BASF Corporation)) having polymerizable acrylate at both ends and a spacer between mesogene in the central portion and the acrylate, and 4.35 parts of a chiral agent (left-handed twisting properties, CNL-716 (manufactured by ADEKA CORPORATION)) having polymerizable acrylate were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 3.

Next, the cyclohexanone solution 1 was applied to the biaxially oriented film by a bar coater without an oriented film. Subsequently, after retaining at a temperature of 120°C for two minutes, cyclohexanone in the cyclohexanone solution was vaporized to orient the liquid crystalline monomer molecule and obtained a right-handed twisted coating film. Then, the obtained coating film was irradiated with ultraviolet rays at 800 mJ/cm$^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a right-circularly-polarized-light selective reflective layer (a film thickness of 5 $\mu$m) by fixing a cholesteric structure on the biaxially oriented film.

In addition, the cyclohexanone solution 2 was applied to the right-circularly-polarized-light selective reflective layer by a bar coater. Subsequently, after retaining at a temperature of 120°C for two minutes, cyclohexanone in the cyclohexanone solution was vaporized to orient the liquid crystalline monomer molecule and obtained a right-handed twisted coating film. Then, the obtained coating film was irradiated with ultraviolet rays at 800 mJ/cm$^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a right-circularly-polarized-light selective reflective layer (a film thickness of 5 $\mu$m) by fixing a cholesteric structure.

Lastly, the cyclohexanone solution 3 was applied to the right-circularly-polarized-light selective reflective layer by a bar coater. Subsequently, after retaining at a temperature of 120°C for two minutes, cyclohexanone in the cyclohexanone solution was vaporized to orient the liquid crystalline monomer molecule and obtained a left-handed twisted coating film. Then, the obtained coating film was irradiated with ultraviolet rays at 800 mJ/cm$^2$ by using an ultraviolet irradiation device to three-dimensionally crosslink and polymerize acrylate of the liquid crystalline monomer molecule

oriented by a radical generated from the photopolymerization initiator in the coating film and acrylate of the chiral agent, and then formed a left-circularly-polarized-light selective reflective layer (a film thickness of 5 μm) by fixing a cholesteric structure. Thus, an electromagnetic wave reflective member was obtained.

[Example 3]

A biaxially oriented film made of polyethylene terephthalate was prepared as a transparent substrate. First, a cyclohexanone solution, in which 96.95 parts of a liquid crystalline monomer molecule (Paliocolor (registered trademark) LC1057 (manufactured by BASF CORPORATION)) having polymerizable acrylate at both ends and a spacer between mesogene in the central portion and the acrylate, and 3. 05 parts of a chiral agent (right-handed twisting properties, Paliocolor (registered trademark) LC756 (manufactured by BASF CORPORATION)) having polymerizable acrylate at both ends were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 1.

Secondly, a cyclohexanone solution, in which 97.55 parts of a liquid crystalline monomer molecule (Paliocolor (registered trademark) LC1057 (manufactured by BASF CORPORATION)) having polymerizable acrylate at both ends and a spacer between mesogene in the central portion and the acrylate, and 2.45 parts of a chiral agent (right-handed twisting properties, Paliocolor (registered trademark) LC756 (manufactured by BASF CORPORATION)) having polymerizable acrylate at both ends were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 2.

Thirdly, a cyclohexanone solution, in which 95.65 parts of a liquid crystalline monomer molecule (Paliocolor (registered trademark) LC1057 (manufactured by BASF Corporation)) having polymerizable acrylate at both ends and a spacer between mesogene in the central portion and the acrylate, and 4.35 parts of a chiral agent (left-handed twisting properties, CNL-716 (manufactured by ADEKA CORPORATION)) having polymerizable acrylate were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 3.

Lastly, a cyclohexanone solution, in which 96.65 parts of a liquid crystalline monomer molecule (Paliocolor (registered trademark) LC1057 (manufactured by BASF Corporation)) having polymerizable acrylate at both ends and a spacer between mesogene in the central portion and the acrylate, and 3.35 parts of a chiral agent (left-handed twisting properties, CNL-716 (manufactured by ADEKA CORPORATION)) having polymerizable acrylate were dissolved, was prepared. A photopolymerization initiator (Irgacure 184) of 5.0% by weight with respect to the liquid crystalline monomer molecule was added to the cyclohexanone solution (a solid content of 30% by weight). This was regarded as a cyclohexanone solution 4.

First, the cyclohexanone solution 1 was applied to the biaxially oriented film by a bar coater without an oriented film. Subsequently, after retaining at a temperature of 120°C for two minutes, cyclohexanone in the cyclohexanone solution was vaporized to orient the liquid crystalline monomer molecule and obtained a right-handed twisted coating film. Then, the obtained coating film was irradiated with ultraviolet rays at 800 $mJ/cm^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a right-circularly-polarized-light selective reflective layer (a film thickness of 5 μm) by fixing a cholesteric structure on the biaxially oriented film.

Next, the cyclohexanone solution 2 was applied to the right-circularly-polarized-light selective reflective layer by a bar coater. Subsequently, after retaining at a temperature of 120°C for two minutes, cyclohexanone in the cyclohexanone solution was vaporized to orient the liquid crystalline monomer molecule and obtained a right-handed twisted coating film. Then, the obtained coating film was irradiated with ultraviolet rays at 800 $mJ/cm^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a right-circularly-polarized-light selective reflective layer (a film thickness of 5 μm) by fixing a cholesteric structure.

Thirdly, the cyclohexanone solution 3 was applied to the right-circularly-polarized-light selective reflective layer by a bar coater. Subsequently, after retaining at a temperature of 120°C for two minutes, cyclohexanone in the cyclohexanone solution was vaporized to orient the liquid crystalline monomer molecule and obtained a left-handed twisted coating film. Then, the obtained coating film was irradiated with ultraviolet rays at 800 $mJ/cm^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a left-circularly-polarized-light selective reflective layer (a film thickness of 5 μm) by fixing a cholesteric

structure.

Lastly, the cyclohexanone solution 4 was applied to the left-circularly-polarized-light selective reflective layer by a bar coater. Subsequently, after retaining at a temperature of 120°C for two minutes, cyclohexanone in the cyclohexanone solution was vaporized to orient the liquid crystalline monomer molecule and obtained a left-handed twisted coating film. Then, the obtained coating film was irradiated with ultraviolet rays at 800 mJ/cm$^2$ by using an ultraviolet irradiation device to three-dimensionally crosslink and polymerize acrylate of the liquid crystalline monomer molecule oriented by a radical generated from the photopolymerization initiator in the coating film and acrylate of the chiral agent, and then formed a left-circularly-polarized-light selective reflective layer (a film thickness of 5 μm) by fixing a cholesteric structure. Thus, an electromagnetic wave reflective member was obtained.

[Evaluation 2]

The reflection properties of the electromagnetic wave reflective members obtained in Examples 2 and 3 were measured (measured at a regular reflection angle of 5°) by using a spectrophotometer (UV-3100PC™ manufactured by SHIMADZU CORPORATION). The results are shown in FIGS. 8 and 9.

As shown in FIG. 8, in the electromagnetic wave reflective member obtained in Example 2, a reflectance of 50% or more was obtained in a reflex band having a peak in the vicinity of 1030 nm, thus it was confirmed that the left-circularly-polarized-light selective reflective layer formed on the right-circularly-polarized-light selective reflective layer performed favorable reflectivity. Additionally, as shown in FIG. 9, in the electromagnetic wave reflective member obtained in Example 3, a reflectance of approximately 50% or more was obtained in both a reflex band having a peak in the Vicinity of 1030 nm and a reflex band having a peak in the vicinity of 1200 nm, thus it was confirmed that the two left-circularly-polarized-light selective reflective layers formed on the right-circularly-polarized-light selective reflective layer performed favorable reflectivity.

Reference Signs List

| | |
|---|---|
| 1 | transparent substrate |
| 2 | right-circularly-polarized-light selective reflective layer |
| 3 | left-circularly-polarized-light selective reflective layer |
| 12 | right-handed twisted coating film |
| 13 | left-handed twisted coating film |
| **21, 22** | **energy** |

## Claims

1. An electromagnetic wave reflective member production method comprising steps of:

    a right-circularly-polarized-light selective reflective layer forming step, and
    a left-circularly-polarized-light selective reflective layer forming step,
    **characterized in that** a right-handed twisted coating film is formed in the right-circularly-polarized-light selective reflective layer forming step by: applying a right-handed twisting coating liquid containing a first rodlike compound which has a polymerizable functional group in a molecule and is capable of forming a cholesteric structure, and a chiral agent for providing right-handed twisting properties on a transparent substrate; and forming a substantially fully cured right-circularly-polarized-light selective reflective layer by means of energy irradiation of the right-handed twisted coating film for polymerization of the first rodlike compound, and
    a left-handed twisted coating film is formed in the left-circularly-polarized-light selective reflective layer forming step by: applying a left-handed twisting coating liquid containing a second rodlike compound which has a polymerizable functional group in a molecule and is capable of forming a cholesteric structure, and a chiral agent for providing left-handed twisting properties on the right-circularly-polarized-light selective reflective layer and forming a left-circularly-polarized-light selective reflective layer by means of energy irradiation of the left-handed twisted coating film for polymerization of the second rodlike compound.

2. The electromagnetic wave reflective member production method according to Claim 1, **characterized in that** the energy irradiation in the right-circularly-polarized-light selective reflective layer forming step is ultraviolet irradiation and an intensity of the ultraviolet irradiation is 400 mJ/cm$^2$ or more.

FIG. 1A

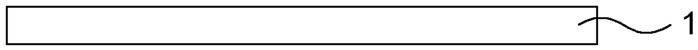


FIG. 1B

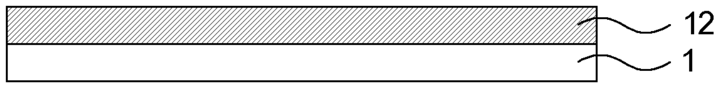


FIG. 1C

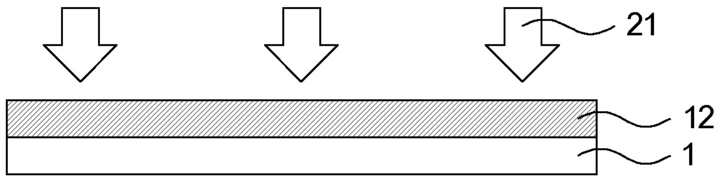


FIG. 1D

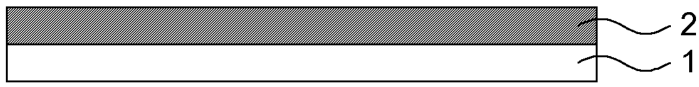


FIG. 1E

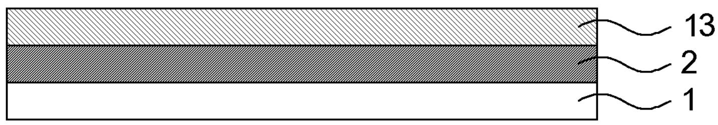


FIG. 1F

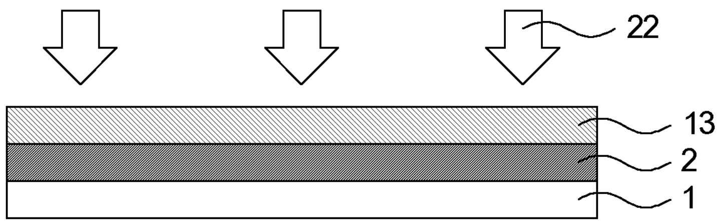


FIG. 1G

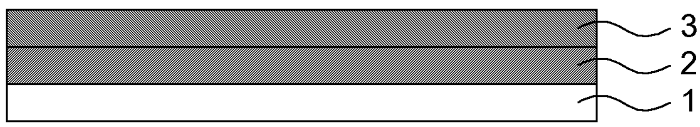

FIG. 2A

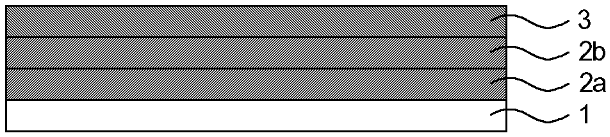


FIG. 2B

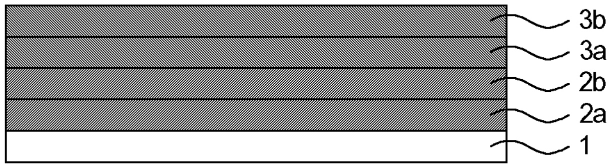


FIG. 2C

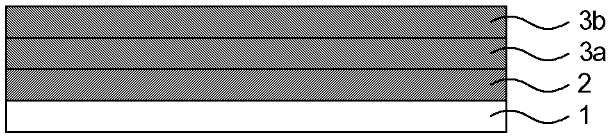


FIG. 3

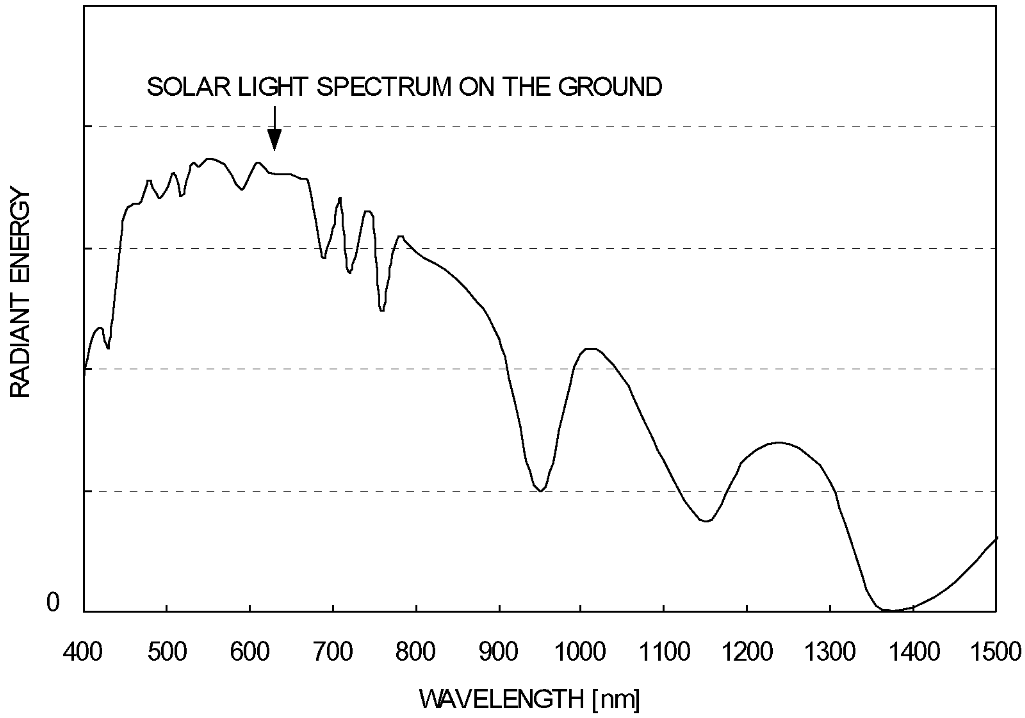

FIG. 4

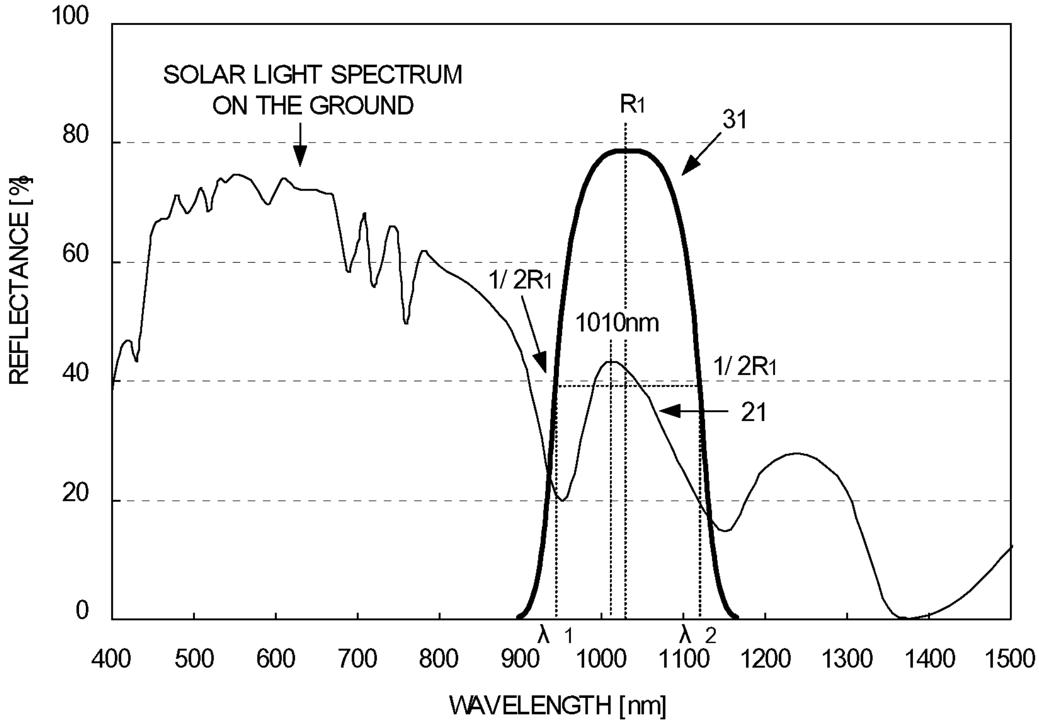
100
80
60
40
20
0
REFLECTANCE [%]
SOLAR LIGHT SPECTRUM
ON THE GROUND
R1
31
1/ 2R1
1010nm
1/ 2R1
21
λ 1
λ 2
400
500
600
700
800
900
1000
1100
1200
1300
1400
1500
WAVELENGTH [nm]

FIG. 5

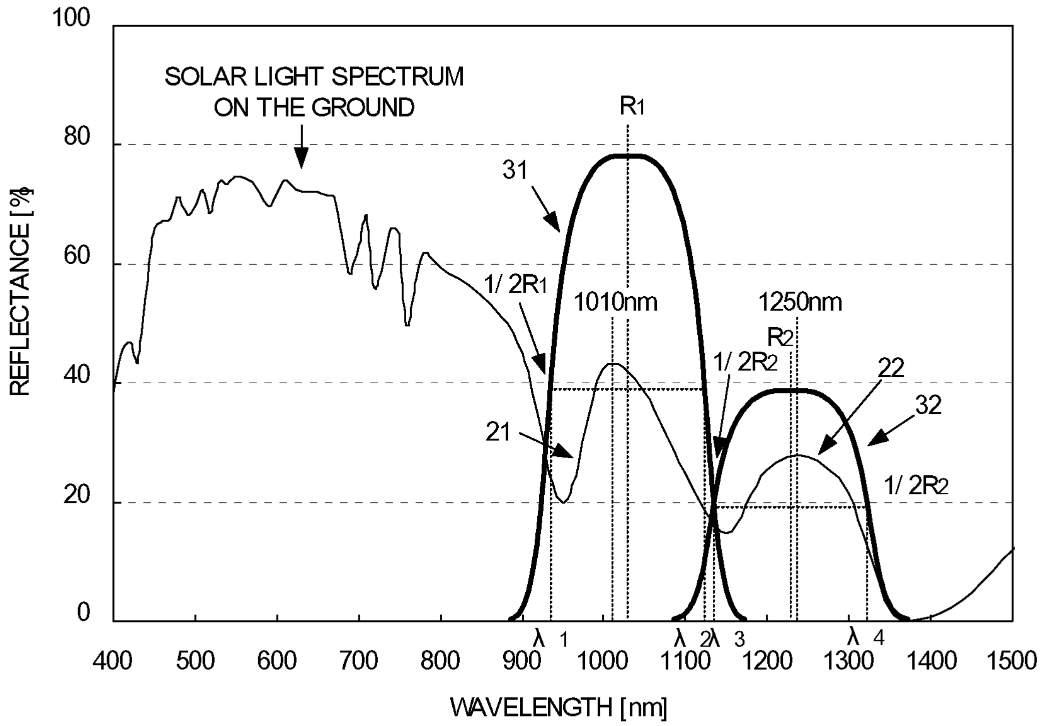
100
80
60
40
20
0
REFLECTANCE [%]
SOLAR LIGHT SPECTRUM
ON THE GROUND
R1
31
1/ 2R1
1010nm
1250nm
R2
1/ 2R2
22
32
21
1/ 2R2
λ 1
λ 2
λ 3
λ 4
400
500
600
700
800
900
1000
1100
1200
1300
1400
1500
WAVELENGTH [nm]

FIG. 6

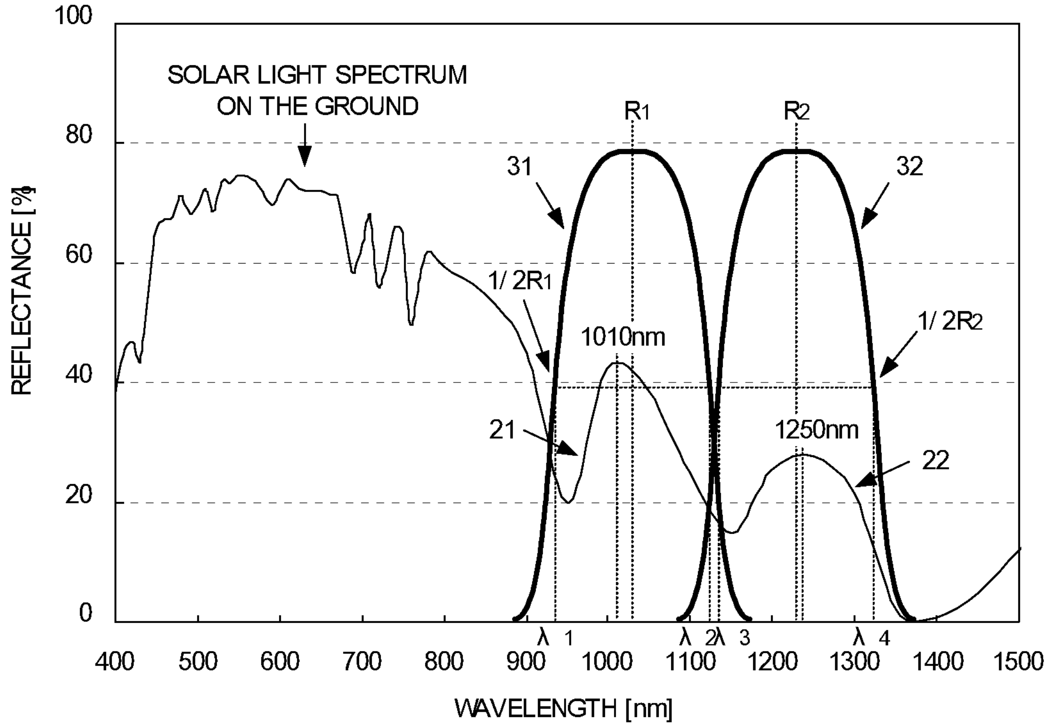
SOLAR LIGHT SPECTRUM
ON THE GROUND
R1
R2
31
32
1/2R1
1/2R2
1010nm
1250nm
21
22
λ1
λ2
λ3
λ4
REFLECTANCE [%]
WAVELENGTH [nm]
0
20
40
60
80
100
400
500
600
700
800
900
1000
1100
1200
1300
1400
1500

FIG. 7

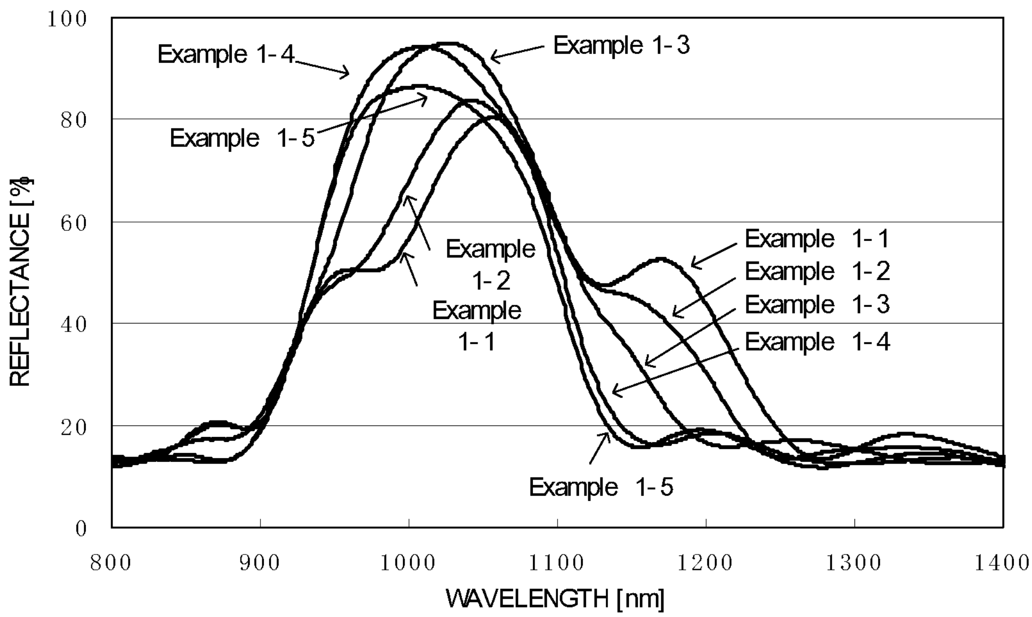
Example 1-4
Example 1-3
Example 1-5
Example 1-2
Example 1-1
Example 1-1
Example 1-2
Example 1-3
Example 1-4
Example 1-5
REFLECTANCE [%]
WAVELENGTH [nm]
0
20
40
60
80
100
800
900
1000
1100
1200
1300
1400

FIG. 8

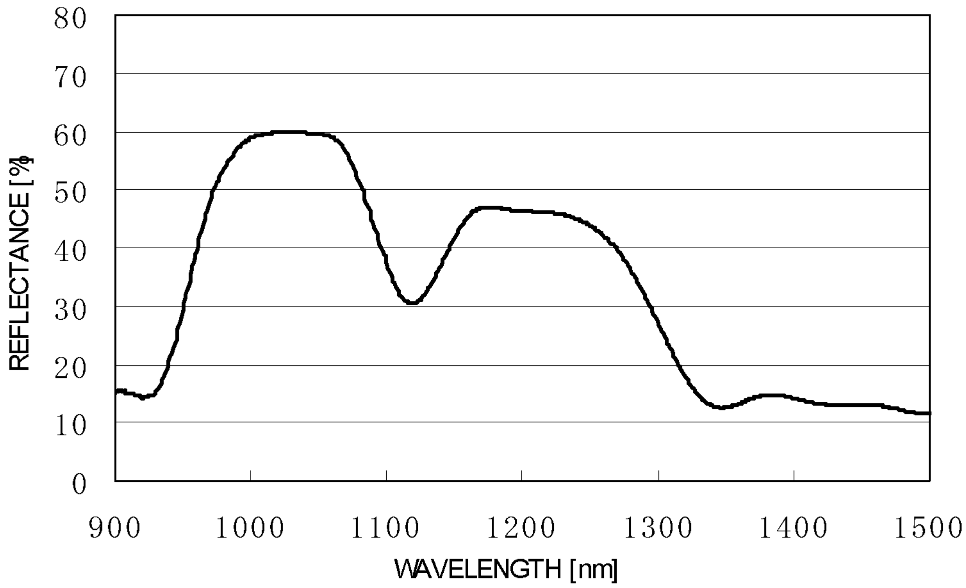
80
70
60
50
40
30
20
10
0
REFLECTANCE [%]
900
1000
1100
1200
1300
1400
1500
WAVELENGTH [nm]

FIG. 9

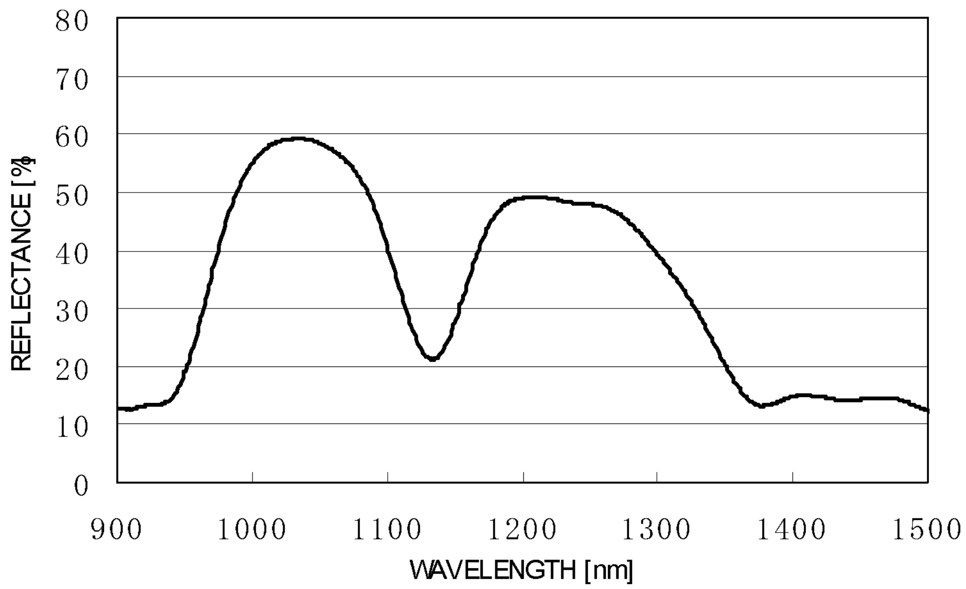
80
70
60
50
40
30
20
10
0
REFLECTANCE [%]
900
1000
1100
1200
1300
1400
1500
WAVELENGTH [nm]

## INTERNATIONAL SEARCH REPORT

International application No.
PCT/JP2010/073208

A. CLASSIFICATION OF SUBJECT MATTER
*G02B5/30*(2006.01)i, *G02B5/26*(2006.01)i

According to International Patent Classification (IPC) or to both national classification and IPC

B. FIELDS SEARCHED

Minimum documentation searched (classification system followed by classification symbols)
G02B5/30, G02B5/26

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-294940 A (Nitto Denko Corp.), 15 October 2003 (15.10.2003), paragraphs [0045] to [0051]; fig. 3 (Family: none) | 1,2 |
| Y | JP 2004-118036 A (Dainippon Printing Co., Ltd.), 15 April 2004 (15.04.2004), paragraphs [0008], [0025] (Family: none) | 1,2 |
| E,X | JP 2010-286644 A (Fujifilm Corp.), 24 December 2010 (24.12.2010), paragraphs [0078] to [0091] (Family: none) | 1,2 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 January, 2011 (31.01.11) | 08 February, 2011 (08.02.11) |

| Name and mailing address of the ISA/ | Authorized officer |
|---|---|
| Japanese Patent Office | |
| Facsimile No. | Telephone No. |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H04281403 B
- JP 2001519317 W
- JP 3419568 B
- JP 2008209574 A
- DE 19504224


### Non-patent literature cited in the description


- **D. J. BROER et al.** *Makromol. Chem.,* 1989, vol. 190, 3201-3215
- **D. J. BROER et al.** *Makromol. Chem.,* 1989, vol. 190, 2255-2268